(19) **Europäisches Patentamt**
**European Patent Office**
**Office européen des brevets**

(11) **EP 1 518 318 B1**

(12) **EUROPÄISCHE PATENTSCHRIFT**

(45) Veröffentlichungstag und Bekanntmachung des Hinweises auf die Patenterteilung:
**23.12.2009 Patentblatt 2009/52**

(21) Anmeldenummer: **02792770.6**

(22) Anmeldetag: **18.11.2002**

(51) Int Cl.:
*H02P 7/00* (2006.01)       *H02K 33/16* (2006.01)

(86) Internationale Anmeldenummer:
**PCT/EP2002/012884**

(87) Internationale Veröffentlichungsnummer:
**WO 2004/004112 (08.01.2004 Gazette 2004/02)**

(54) **VERFAHREN ZUM STEUERN EINES OSZILLIERENDEN ELEKTROMOTORS EINES ELEKTRISCHEN KLEINGERÄTS**

METHOD FOR CONTROLLING AN OSCILLATING ELECTRIC MOTOR OF A SMALL ELECTRICAL APPLIANCE

PROCEDE POUR COMMANDER UN MOTEUR ELECTRIQUE OSCILLANT D'UN PETIT APPAREIL ELECTRIQUE

(84) Benannte Vertragsstaaten:
**AT BE BG CH CY CZ DE DK EE ES FI FR GB GR IE IT LI LU MC NL PT SE SK TR**

(30) Priorität: **29.06.2002 DE 10229319**

(43) Veröffentlichungstag der Anmeldung:
**30.03.2005 Patentblatt 2005/13**

(73) Patentinhaber: **Braun GmbH**
**61476 Kronberg (DE)**

(72) Erfinder:
• **KLEMM, Torsten**
  **65812 Bad Soden (DE)**
• **KRAUS, Bernhard**
  **35619 Braunfels (DE)**
• **SCHAAF, Uwe**
  **64665 Alsbach-Hähnlein (DE)**

(56) Entgegenhaltungen:
**EP-A- 0 952 663       EP-A- 0 977 344**
**EP-A- 1 063 760       EP-A- 1 117 176**
**US-A- 5 632 087**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum Steuern eines oszillierenden Elektromotors eines elektrischen Kleingeräts, insbesondere eines elektrischen Rasierers oder einer elektrischen Zahnbürste.

Ein oszillierender Elektromotor ist in der Regel als ein schwingungsfähiges System aufgebaut, dem mittels einer als Elektromagnet betriebenen Spule Energie zugeführt wird. Damit jeweils zum richtigen Zeitpunkt die richtige Energiemenge zugeführt werden kann, ist es erforderlich. den Rewegungszustand des Elektromotors zu erfassen. Hierzu sind bereits verschiedene Vorgehensweisen bekannt.

Aus der US 5 632 087 ist ein Trockenrasierer mit einem Linearmotor bekannt. Der Linearmotor weist eine Statorspule und einen mit einem Dauermagneten bestückten Läufer auf, der durch die Statorspule in eine lineare Schwingungsbewegung versetzt wird. Mittels eines Detektors wird die Auslenkung des Läufers erfasst und abhängig davon die Stromversorgung der Statorspule so gesteuert, dass die Schwingungsamplitude des Läufers konstant gehalten wird. Der Detektor besteht aus einem am Läufer angeordneten Dauermagneten und einer ortsfest montierten Sensorspule, in der durch Einwirkung des Dauermagneten eine von der Geschwindigkeit des Läufers abhängige Induktionsspannung generiert wird.

Die EP 1 063 760 A2 offenbart ein Steuersystem für einen oszillierenden Linearmotor, bei dem ein Läufer relativ zu einem Stator in eine lineare Schwingung mit einer konstanten Schwingungsamplitude versetzt wird. Der Linearmotor weist eine Spule auf, die entweder am Stator oder am Läufer angeordnet ist. An der jeweils anderen Komponente, d. h. am Läufer oder am Stator ist ein Dauermagnet angeordnet. Durch Einwirkung des bei einem Stromfluss durch die Spule erzeugten Magnetfelds auf den Dauermagneten wird der Läufer in eine lineare Schwingungsbewegung versetzt. Dabei wird der Stromfluss so gesteuert, dass sich eine konstante Schwingungsamplitude ergibt. Zur Ermittlung der Schwingungsamplitude wird die Stromzufuhr zur Spule jeweils unterbrochen und es wird die dann an der Spule anliegende Spannung ermittelt, so dass kein zusätzlicher Sensor erforderlich ist.

Der Erfindung liegt die Aufgabe zugrunde, eine möglichst optimale Ansteuerung eines oszillierenden Elektromotors für ein elektrisches Kleingerät zu ermöglichen.

Diese Aufgabe wird durch ein Verfahren gemäß Anspruch 1 gelöst.

Beim erfindungsgemäßen Verfahren zur Steuerung eines oszillierenden Elektromotors eines elektrischen Kleingeräts wird einer Spule wenigstens zeitweise ein elektrischer Strom zur Ausbildung eines Magnetfelds zugeführt, das von einer ersten Motorkomponente ausgeht und auf eine zweite Motorkomponente derart einwirkt, dass die zweite Motorkomponente relativ zur ersten Motorkomponente in eine Schwingungsbewegung versetzt wird. Für einen Zeitpunkt, zu dem eine Stromzufuhr zur Spule erfolgt, wird wenigstens eine elektrisch Kenngröße der Spule ermittelt, die mit einer Bewegungsgröße der ersten oder der zweiten Motorkomponente zusammenhängt. Die zukünftige Stromzufuhr zur Spule erfolgt abhängig von der ermittelten Kenngröße.

Das erfindungsgemäße Verfahren hat den Vorteil, dass eine präzise Steuerung des Elektromotors ohne zusätzlichen Sensor zur Erfassung des Bewegungszustands des Elektromotors erfolgt, da die ohnehin vorhandene Spule gleichzeitig als Sensor eingesetzt wird. Dabei ist es insbesondere vorteilhaft, dass der Betrieb des Elektromotors trotz der Doppelfunktion der Spule nicht eingeschränkt wird, da die Stromzufuhr zur Spule für die Erfassung des Bewegungszustands des Elektromotors nicht unterbrochen wird. Dies bedeutet insbesondere auch, dass eine mit einer derartigen Unterbrechung der Stromzufuhr einhergehende Reduzierung der maximalen Leistung und des Wirkungsgrads des Elektromotors vermieden werden kann. Ein weiterer Vorteil besteht darin, dass das erfindungsgemäße Verfahren sehr universell eingesetzt werden kann, insbesondere auch bei Elektromotoren, bei denen sich der Verlauf der in der Spule induzierten Spannung in Abhängigkeit von der Schwingungsamplitude stark ändert.

Die zweite Motorkomponente erzeugt oder beeinflusst ein Magnetfeld und induziert dadurch eine Spannung in der Spule. Auf diese Weise wird ein Zusammenhang zwischen einer Bewegungsgröße der ersten relativ zu der zweiten Motorkomponente und wenigstens einer elektrischen Kenngröße der Spule hergestellt.

Als elektrische Kenngröße kann die an der Spule insgesamt anliegende Spannung ermittelt werden. Weiterhin kann als elektrische Kenngröße der durch die Spule fließende Strom ermittelt werden. Dabei kann insbesondere wenigstens ein Messwert für den Strom durch die Spule vor einem Zeitpunkt, für den der Strom ermittelt werden soll, und wenigstens ein Messwert nach diesem Zeitpunkt erfasst werden und ein Mittelwert der erfassten Messwerte gebildet werden. Schließlich kann als elektrische Kenngröße die zeitliche Änderung des durch die Spule fließenden Stroms ermittelt werden. Zur Ermittlung der zeitlichen Änderung des Stroms zu einem vorgebbaren Zeitpunkt können Messwerte für den Strom vor und nach diesem Zeitpunkt erfasst werden und die Differenz der Messwerte durch die Zeitdifferenz zwischen den Erfassungen dividiert werden. Dabei ist es von Vorteil, dass sämtliche vorgenannten elektrischen Kenngrößen mit einem relativ geringen Aufwand ermittelt werden können.

In einem bevorzugten Ausführungsbeispiel wird wenigstens eine elektrische Kenngröße zu einem Zeitpunkt ermittelt, zu dem die Relativgeschwindigkeit zwischen den beiden Motorkomponenten betragsmäßig ihren Maximalwert annimmt. Dies hat den Vorteil, dass der Zusammenhang zwischen der wenigstens einen elektrischen Kenngröße und der Bewegungsgröße der ersten relativ zur zweiten Motorkomponente dann besonders einfach darstellbar ist. Der Zeitpunkt für den Maximalwert der Relativgeschwindigkeit zwischen den beiden Motorkomponenten kann dabei aus den Zeitpunkten ermittelt werden, zu denen diese Geschwindigkeit Null ist. Weiterhin kann eine Schwingungsfrequenz der Motorkomponenten aus den Zeitpunkten, zu denen die Relativgeschwindigkeit zwischen diesen Null ist, ermittelt werden. Dabei werden als Zeitpunkte, zu denen die Relativgeschwindigkeit zwischen den beiden Motorkomponenten Null ist, bevorzugt die Nulldurchgänge der an der Spule insgesamt anliegenden Spannung herangezogen. Dies hat den Vorteil, dass sich die Nulldurchgänge messtechnisch sehr einfach erfassen lassen.

Im bevorzugten Ausführungsbeispiel wird zur Ermittlung des Zeitpunkts für den Maximalwert der Geschwindigkeit die Zeitdifferenz zwischen dem letzten und dem vorletzten Nulldurchgang gebildet und die Hälfte der Zeitdifferenz zur Zeit für den letzten Nulldurchgang addiert. Dabei ist es von Vorteil, dass die Nulldurchgänge auch für die Ermittlung der Schwingungsfrequenz der zweiten Motorkomponente verwendet werden können.

Zur Ermittlung eines Nulldurchgangs kann das Vorzeichen der an der Spule insgesamt anliegenden Spannung jeweils wiederholt erfasst werden und bei einem Vorzeichenwechsel zwischen aufeinanderfolgenden Erfassungen ein Nulldurchgang detektiert werden. Um eine möglichst hohe Genauigkeit zu erzielen ist es dabei von Vorteil, wenn der Zeitpunkt des Nulldurchgangs durch Interpolation zwischen der letzten Erfassung vor dem Vorzeichenwechsel und der ersten Erfassung nach dem Vorzeichenwechsel ermittelt wird.

Im bevorzugten Ausführungsbeispiel werden die elektrischen Kenngrößen für den selben Zeitpunkt ermittelt, da diese jeweils zeitabhängig sind und einander beeinflussen.

Aus der wenigstens einen elektrischen Kenngröße kann ein Parameter zur Charakterisierung der Schwingungsbewegung des Elektromotors ermittelt werden. Insbesondere kann die Relativgeschwindigkeit zwischen den beiden Motorkomponenten ermittelt werden. Weiterhin kann eine Schwingungsamplitude der Motorkomponenten ermittelt werden. Im bevorzugten Ausführungsbeispiel wird der der Spule zugeführte Strom abhängig von einer Abweichung des ermittelten Parameters zur Charakterisierung der Schwingungsbewegung von einem gewünschten Wert variiert. Dies ermöglicht eine sehr einfache und zuverlässige Steuerung der Stromzufuhr zur Spule.

Der Spule kann ein abhangig von der wenigstens einen elektrischen Kenngröße pulsweitenmodulierter Strom zugeführt werden. Weiterhin kann der Spule ein Strom mit einer von der wenigstens einen elektrischen Kenngröße abhängigen Stromstärke zugeführt werden.

Die Erfindung wird nachfolgend an Hand des in der Zeichnung dargestellten Ausführungsbeispiels erläutert.

Es zeigen

Fig. 1   ein Ausführungsbeispiel eines oszillierenden Linearmotors in schematischer Darstellung,

Fig. 2   Diagramme für den zeitlichen Verlauf der Auslenkung eines Läufers aus seiner Gleichgewichtsposition (oben), der Geschwindigkeit des Läufers (Mitte) und einer von Permanentmagneten in einer Spule eines Stators induzierten Spannung (unten) und

Fig. 3   ein Diagramm für den zeitlichen Verlauf der an der Spule 5 insgesamt anliegenden Spannung (oben) und ein Diagramm für den durch die Spule insgesamt fließenden Strom (unten).

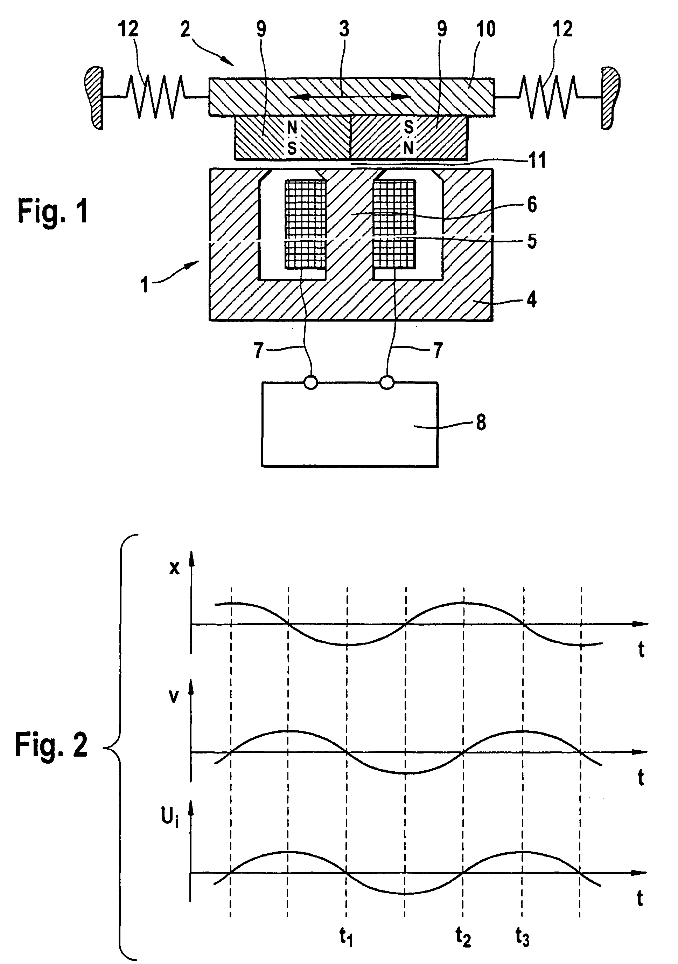

Fig. 1 zeigt ein Ausführungsbeispiel eines oszillierenden Linearmotors in schematischer Darstellung. Der Linearmotor weist einen ortsfest angeordneten Stator 1 auf und einen Läufer 2, der eine lineare Bewegung in den mit einem Doppelpfeil 3 bezeichneten Richtungen ausführen kann. Alternativ dazu kann der Stator 1 bezüglich seiner Bewegungsfreiheitsgrade entsprechend dem Läufer 2 ausgebildet sein, d. h. der Stator 1 kann durch eine Komponente ersetzt werden, die im Hinblick auf ihre Beweglichkeit dem Läufer 2 entspricht, ansonsten aber die Funktionsmerkmale des Stators 1 aufweist. Da sich die Darstellung der Erfindung dadurch vereinfacht, wird im folgenden jedoch ausschließlich das Ausführungsbeispiel mit ortsfest angeordnetem Stator 1 herangezogen. Der Stator 1 besteht aus einem Eisenkern 4, der in Form eines "E" ausgebildet ist, und einer aus Draht gewickelten Spule 5. Die Spule 5 ist um einen Mittelbalken 6 des Eisenkerns 4 gewickelt und über Anschlussleitungen 7 elektrisch mit einem Steuergerät 8 verbunden. Der Läufer 2 weist zwei Dauermagnete 9 auf, die jeweils mit einem ihrer Pole an einer Trägerplatte 10 anliegen und mit antiparalleler Orientierung dicht nebeneinander angeordnet sind. Die Dauermagnete 9 sind bis auf einen Luftspalt 11 der Stirnseite des Mittelbalkens 6 des Eisenkerns 4 angenähert. Die Trägerpiaiie 10 besteht ebenso wie der Eisenkern 4 aus einem Eisenwerkstoff und ist an zwei entgegengesetzten Seiten jeweils mit einem Ende je einer Schraubenfeder 12 verbunden. Die anderen Enden der Schraubenfedern 12 sind ortsfest aufgehängt, beispielsweise an einem Gehäuse eines elektrischen Kleingeräts, in das der Linearmotor eingebaut ist, so dass der Läufer 2 in den mit dem Doppelpfeil 3 bezeichneten Richtungen lineare Schwingungsbewegungen ausführen kann.

Im Betriebszustand des Linearmotors wird durch eine entsprechende Ansteuerung mittels des Steuergeräts 8 ein Stromfluss durch die Spule 5 hergestellt, so dass sich im Eisenkern 4 ein Magnetfeld aufbaut. Insbesondere im Bereich der Stirnfläche des Mittelbalkens 6 des Eisenkerns 4 wirkt das Magnetfeld auf die Dauermagnete 9 ein und bewirkt bei der in Fig. 1 dargestellten Geometrie eine seitliche Verschiebung des Läufers 2 relativ zum Stator 1. Die Richtung der Verschiebung hängt von der Stromrichtung in der Spule 5 ab. Mittels einer Variation des Stromflusses durch die Spule 5, bei der in der Regel auch die Stromrichtung variiert wird, und unterstützt von den Schraubenfedern 12 kann der Läufer 2 in eine lineare Schwingungsbewegung versetzt werden. Einige Bewegungsgrößen dieser Schwingungsbewegung sind in Fig. 2 dargestellt.

Fig. 2 zeigt Diagramme für den zeitlichen Verlauf einer Auslenkung x des Läufers 2 aus seiner Gleichgewichtsposition (oben), einer Geschwindigkeit v des Läufers 2 (Mitte) und einer von den Permanentmagneten 9 in der Spule 5 induzierten Spannung (unten). Hierzu ist auf der Abszisse in allen Diagrammen jeweils die Zeit t aufgetragen. Auf der Ordinate sind im oberen Diagramm die Auslenkung x des Läufers 2, genauer gesagt des Massenschwerpunktes des Läufers 2, im mittleren Diagramm die Geschwindigkeit v des Läufers 2 und im unteren Diagramm die in der Spule 5 induzierte Spannung $U_i$ aufgetragen.

Der Läufer 2 führt eine lineare harmonische Schwingung aus, so dass der zeitliche Verlauf der Auslenkung x des Läufers 2 aus der Gleichgewichtsposition durch eine Kosinusfunktion dargestellt werden kann, d. h. es gilt:

$$x = A \cos(\omega t - \varphi)$$

Dabei kennzeichnen A die maximale Auslenkung des Läufers 2 aus der Gleichgewichtsposition, d. h. die Schwingungsamplitude, $\omega$ die Kreisfrequenz und $\varphi$ die Phase.

Der zeitliche Verlauf der Geschwindigkeit v des Läufers 2 ist dann entsprechend durch eine Sinusfunktion darzustellen, mit:

$$v = A \omega \sin(\omega t - \varphi)$$

Die Zeitverläufe der Auslenkung x und der Geschwindigkeit v des Läufers 2 sind somit um n/2 zueinander phasenverschoben.

Die Ansteuerung der Spule 5 durch das Steuergerät 8 wird zeitlich auf den Bewegungszustand des Läufers 2 abgestimmt, um mit dem erzeugten Stromfluss durch die Spule 5 jeweils die gewünschte Wirkung zu erzielen. Weiterhin wird die über das Magnetfeld der Spule 5 dem Läufer 2 jeweils zugeführte Energie von den jeweiligen Erfordernisse abhängig gemacht. Insbesondere wird diese Energie so bemessen, dass die Schwingungsamplitude A möglichst konstant gehalten wird, und zwar auch dann, wenn der Läufer 2 einer schwankenden Belastung ausgesetzt ist. Die schwankende Belastung wird durch eine entsprechende Variation des Stromflusses durch die Spule 5 ausgeglichen. Dabei ist es für eine Regelung der Schwingungsamplitude A auf einen konstanten Wert erforderlich, jeweils die Schwingungsamplitude A oder eine damit zusammenhängende Größe zu ermitteln. Für die Ermittlung der Schwingungsamplitude A kann die von den bewegten Dauermagneten 9 in der Spule 5 induzierte Spannung $U_i$ herangezogen werden. Da die Dauermagnete 9 Bestandteile des Läufers 2 sind, hängt die induzierte Spannung $U_i$ vom Bewegungszustand des Läufers 2 ab. Für den Zusammenhang zwischen der induzierten Spannung $U_i$ und der Geschwindigkeit v des Läufers 2 gilt:

$$U_i = M_K v$$

Die induzierte Spannung $U_i$ ist somit direkt proportional zur Geschwindigkeit v des Läufers 2 mit einer Proportionalitätskonstante $M_K$, die vom Aufbau des Linearmotors abhängt. Wie auch der Figur 2 zu entnehmen ist, wird der zeitliche Verlauf der induzierten Spannung $U_i$ somit ebenfalls durch eine Kosinusfunktion repräsentiert, die die gleiche Periodizität wie die Kosinusfunktion für den zeitlichen Verlauf der Geschwindigkeit v des Läufers 2 besitzt und gleichphasig zu dieser verläuft.

Um ausgehend von der Geschwindigkeit v des Läufers 2 mit einem möglichst geringen Rechenaufwand die Schwingungsamplitude A des Läufers 2 zu ermitteln, kann folgendermaßen vorgegangen werden:

Aus den Nulldurchgängen der Geschwindigkeit v und damit der induzierten Spannung $U_i$ zu den Zeitpunkten $t_1$ und $t_2$, die im Abstand der halben Schwingungsdauer des Läufers 2 aufeinanderfolgen, kann die Schwingungsfrequenz f oder wahlweise die Kreisfrequenz $\omega$ des Läufers 2 ermittelt werden:

$$f = \omega / (2 \pi) = 1 / (2 (t_2 - t_1))$$

Zu einem Zeitpunkt $t_3$, der in der zeitlichen Mitte zwischen aufeinanderfolgenden Nulldurchgängen liegt, nimmt die Geschwindigkeit v betragsmäßig ihren Maximalwert A ω an, so dass gilt:

$$A = v_3 / \omega$$

mit

$$v_3 = v(t_3)$$

Der Zeitpunkt $t_3$ stellt nach dem Nulldurchgang zum Zeitpunkt $t_2$ das erste Betragsmaximum der Geschwindigkeit v bzw. der induzierten Spannung $U_i$ dar und ergibt sich zu:

$$t_3 = t_2 + (t_2 - t_1)/ 2$$

Die Schwingungsamplitude A kann somit dadurch ermittelt werden, dass die Nulldurchgänge der induzierten Spannung $U_i$ erfasst werden und daraus der nächste Zeitpunkt $t_3$ ermittelt wird, zu dem die Geschwindigkeit v des Läufers 2 ihren betragsmäßig maximalen Wert $v_3$ annimmt. Aus der zu diesem Zeitpunkt $t_3$ erfassten induzierten Spannung $U_i$ wird mittels der Proportionalitätskonstanten $M_K$ die maximale Geschwindigkeit $v_3$ des Läufers 2 und daraus wiederum die Schwingungsamplitude A errechnet. Abhängig von der Abweichung der so ermittelten Schwingungsamplitude A von einem gewünschten Wert wird die Stromzufuhr zur Spule 5 gesteuert.

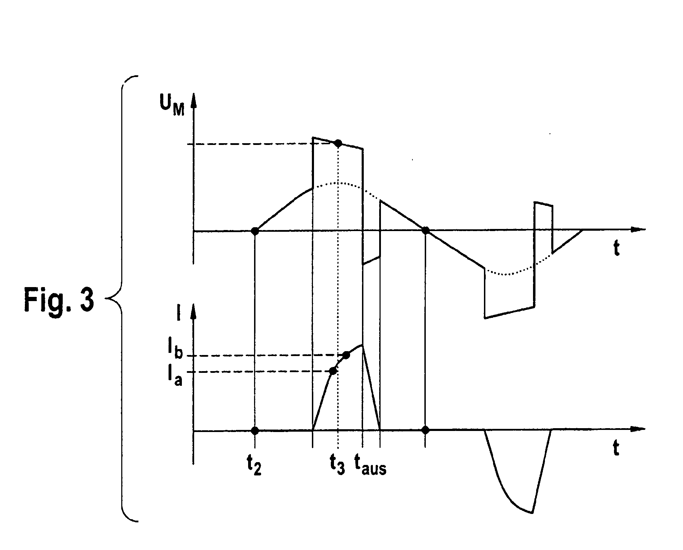

Bei der praktischen Durchführung der geschilderten Vorgehensweise treten jedoch erhebliche Probleme auf, da durch die Spule 5 zum Zeitpunkt $t_3$ in der Regel ein Strom I fließt, der an der Spule 5 einen Spannungsabfall $U_R$ und eine Selbstinduktionsspannung $U_L$ hervorruft und die von den Dauermagneten 9 in der Spule 5 induzierte Spannung $U_i$ zum Zeitpunkt $t_3$ somit einer direkten Messung nicht zugänglich ist. Die erfindungsgemäße Lösung dieses Problems wird im folgenden an Hand der Figur 3 erläutert.

Figur 3 zeigt ein Diagramm für den zeitlichen Verlauf der an der Spule 5 insgesamt anliegenden Spannung UM (oben) und ein Diagramm für den durch die Spule 5 insgesamt fließenden Strom I (unten). In beiden Diagrammen ist auf der Abszisse jeweils die Zeit t aufgetragen. Auf der Ordinate ist im oberen Diagramm die an der Spule 5 anliegende Spannung UM aufgetragen und im unteren Diagramm der durch die Spule 5 fließende Strom I. Dort, wo die an der Spule 5 anliegende Spannung UM von der induzierten Spannung $U_i$ abweicht, ist zusätzlich der Verlauf der induzierten Spannung $U_i$ punktiert eingezeichnet.

Aus dem oberen Diagramm der Fig. 3 ist ersichtlich, dass gerade zum Zeitpunkt t3, zu dem die induzierte Spannung $U_i$ ermittelt werden soll, eine deutliche Abweichung zwischen der an der Spule 5 anliegenden Spannung UM (durchgezogene Linie) und der induzierten Spannung $U_i$ (punktierte Linie) besteht. Diese Abweichung entsteht durch den Spannungsabfall $U_R$, den der durch die Spule 5 fließende Strom I am ohmschen Widerstand der Spule 5 hervorruft. Zu einer weiteren Abweichung zwischen der an der Spule 5 anliegenden Spannung UM und der induzierten Spannung $U_i$ kommt es durch die Selbstinduktion der Spule 5, durch die bei jeder Änderung des Stromflusses durch die Spule 5 eine Gegenspannung $U_L$ induziert wird, die der Änderung des Stromflusses entgegenwirkt. Besonders deutlich ist der Einfluss der Gegenspannung $U_L$ unmittelbar nach Abschaltung der Stromzufuhr zur Spule 5 zum Zeitpunkt $t_{aus}$ ersichtlich. Zu diesem Zeitpunkt $t_{aus}$ ist ein abrupter Einbruch der an der Spule 5 anliegenden Spannung UM zu erkennen, der sogar zu einer Umkehr der Polarität der Spannung $U_M$ führt.

Insgesamt setzt sich somit die an der Spule 5 anliegende Spannung UM aus dem Spannungsabfall $U_R$ am ohmschen Widerstand der Spule 5, der selbstinduzierten Spannung $U_L$ und der von den Dauermagneten 9 induzierten Spannung $U_i$ zusammen, so dass gilt:

$$U_M = U_R + U_L + U_i$$

Für den Spannungsabfall $U_R$ am ohmschen Widerstand der Spule 5 gilt:

$$U_R = R\,I$$

Dabei ist R der ohmsche Widerstand der Spule 5 und I der durch die Spule 5 fließende Strom.

Für die selbstinduzierte Spannung $U_L$ der Spule 5 mit der Induktivität L ist bei einer zeitlichen Änderung des Stroms dl / dt anzusetzen:

$$U_L = L\,dl\,/\,dt$$

Unter Berücksichtigung der Beziehung für die von den Magneten 9 in der Spule 5 induzierten Spannung $U_j$ ergibt sich somit für die an der Spule 5 anliegende Spannung $U_M$:

$$U_M = R\,I + L\,dl\,/\,dt + v\,M_K$$

Daraus folgt für die Geschwindigkeit v des Läufers 2:

$$v = (U_M - R\,I - L\,dl\,/\,dt)\,/\,M_K.$$

Wenn zudem von der vereinfachten Berechnung der Schwingungsamplitude A des Läufers 2 aus der betragsmäßig maximalen Geschwindigkeit $v_3$ des Läufers 2 Gebrauch gemacht wird, ergibt sich insgesamt folgende Vorgehensweise für die Ansteuerung der Spule 5:

Es werden die Nulldurchgänge der von den Permanentmagneten 9 in der Spule 5 induzierten Spannung $U_i$ ermittelt, indem wiederholt die an der Spule 5 anliegende Spannung UM gemessen wird und bei einem Vorzeichenwechsel der Spannung UM zwischen den Zeitpunkten für die letzte Messung vor und die erste Messung nach dem Vorzeichenwechsel interpoliert wird. Alternativ dazu könnten auch die Beträge der Messwerte für die an der Spule 5 anliegende Spannung UM ausgewertet werden. In diesem Fall kann auf einen Nulldurchgang geschlossen werden, wenn die Spannung UM zunächst betragsmäßig abnimmt und dann wieder betragsmäßig zunimmt. Die Nulldurchgänge der induzierten Spannung $U_i$ sind also nur dann identisch mit den Nulldurchgängen der Motorspannung UM wenn der Strom I = 0 ist (und dl/dt = 0). Falls zu den Meßwertpunkten der Strom durch die Motorspule ungleich Null ist, muß von der gemessenen Motorspannung UM noch R x I sowie L dl/dt subtrahiert werden, um die induzierte Spannung $U_1$ zu ermitteln. Aus den ermittelten Zeitpunkten $t_1$ und $t_2$ für aufeinanderfolgende Nulldurchgänge wird der Zeitpunkt $t_3$ für das nächste betragsmäßige Geschwindigkeitsmaximum $v_3$ des Läufers 2 ermittelt und zum Zeitpunkt $t_3$ die an der Spule 5 anliegende Spannung UM gemessen. Weiterhin wird jeweils kurz vor und kurz nach dem Zeitpunkt $t_3$ die durch die Spule 5 fließenden Ströme $I_a$ und $I_b$ gemessen. Aus den Messwerten $I_a$ und $I_b$ wird der Strom I zum Zeitpunkt $t_3$ als Mittelwert ermittelt:

$$I = (I_a + I_b)\,/\,2$$

Die zeitliche Änderung des Stroms dl / dt ergibt sich zu:

$$dl\,/\,dt = (I_b - I_a)\,/\,\Delta t$$

Dabei stellt $\Delta t$ die zwischen den beiden Strommessungen $I_a$ und $I_b$ verstrichene Zeit dar.

Mit Hilfe der obengenanten Formel $v = (U_M - R\,I - L\,dl\,/\,dt)\,/\,M_K$ wird die Geschwindigkeit v des Läufers 2 aus dem gemessenen Wert für die an der Spule 5 anliegende Spannung UM, dem ermittelten Wert für den durch die Spule 5 fließenden Strom I und dessen zeitliche Änderung dl / dt sowie den bekannten Werten für den ohmschen Widerstand R und die Induktivität L der Spule 5 und für die Proportionalitätskonstante $M_K$ berechnet. Da die Messwerte für den Zeitpunkt $t_3$ ermittelt wurden, stellt die daraus berechnete Geschwindigkeit v ein betragsmäßiges Maximum dar, so dass die Schwingungsamplitude A des Läufers 2 daraus durch eine Division durch die Kreisfrequenz $\omega$ berechnet werden kann. Die Kreisfrequenz $\omega$ wurde zuvor aus dem zeitlichen Abstand der aufeinanderfolgenden Nulldurchgänge der an der Spule 5 anliegenden Spannung UM ermittelt. Durch einen Vergleich der Schwingungsamplitude A des Läufers 2 mit dem gewünschten Wert kann ermittelt werden, mit welchem Stromsignal die Spule 5 anzusteuern ist, um den gewünschten Wert für die Schwingungsamplitude A zu erreichen.

Bei dem Stromsignal zur Ansteuerung der Spule 5 handelt es sich in der Regel um ein getaktetes Signal. Insbesondere kann ein pulsweitenmoduliertes Signal eingesetzt werden, wobei bei einer zu geringen Schwingungsamplitude A des Läufers 2 die Pulsweite erhöht wird und bei einer zu großen Schwingungsamplitude A des Läufers 2 die Pulsweite reduziert wird. Ebenso ist es auch möglich mit einem Signal konstanter Pulsweite zu arbeiten und jeweils die Pulshöhe, d. h. die Stromstärke, oder die Flankensteilheit abhängig von der Schwingungsamplitude A des Läufers 2 zu variieren. Auch Kombinationen der geschilderten Vorgehensweisen sind möglich.

Um die Genauigkeit des erfindungsgemäßen Verfahrens zu erhöhen, können weitere Strommessungen und/ oder weitere Spannungsmessungen durchgeführt werden und jeweils entsprechende Mittelwerte gebildet werden. Dabei ist jeweils auf eine korrekte Mittelwertbildung zu achten, d. h. die Mittelwerte sollen jeweils die Verhältnisse zum Zeitpunkt $t_3$ wiedergeben.

Weiterhin kann es erforderlich sein, zusätzliche Maßnahmen für eine zuverlässige Erkennung der Nulldurchgänge der induzierten Spannung $U_i$ zu treffen, da in der an der Spule 5 anliegenden Spannung UM auch anderweitig bedingte Nulldurchgänge auftreten können, die beispielsweise von der selbstinduzierten Spannung $U_L$ hervorgerufen werden können. Zur Erkennung der gewünschten Nulldurchgänge kann ein Filter eingesetzt werden, das Bereiche ausblendet, in denen sich die an der Spule 5 anliegende Spannung UM sehr stark ändert. Ebenso ist es auch möglich, die Suche nach Nulldurchgängen auf Zeitbereiche zu beschränken, in denen die gewünschten Nulldurchgänge zu erwarten sind.

Die Berechnung der induzierten Spannung im Mikrocontroller verläuft vereinfacht dargestellt folgendermaßen:

$$U_i = U_M - R*I - L*dI / dt$$

Der Strom I wird aus dem Spannungsabfall $U_s$ an dem zusätzlich eingebauten Widerstand (Shunt) $R_S$ bestimmt:

$$I = U_s/R_s$$

Verwendet man jeweils 2 Messungen $U_{s1}$ und $U_{s2}$, so ergibt sich für $U_i$:

$$U_i = U_M - R*( U_{s1} + U_{s2})/2/ R_s - L* (U_{s2} - U_{s1})/ R_s /dt$$

Dies läßt sich umformen in:

$$U_i = U_M - U_{s1}*( R/ R_s /2-L/R_s /dt)-U_{s2} (R/ R_s /2+L/ R_s /dt)$$

Die beiden konstanten Ausdrück in den Klammern lassen sich aus den bekannten Werten R, $R_s$, L und dt berechnen. Dadurch reduziert sich die Berechnung von $U_i$ auf:

$$U_i = U_M - c_1* U_{s1} - c_2*U_{s2}$$

mit den beiden Konstanten $c_1$ und $c_2$. Diese Rechnung läßt sich von einem Mikrocontroller sehr einfach und schnell durchführen. Es sind dabei lediglich zwei Subtraktionen und zwei Multplikationen auszuführen. Divisionen oder Differentiationen müssen nicht durchgeführt werden.

**EP 1 518 318 B1**

**Patentansprüche**

1. Verfahren zur Steuerung eines oszillierenden Elektromotors eines elektrischen Kleingeräts, bei dem einer Spule (5) wenigstens zeitweise ein elektrischer Strom zur Ausbildung eines Magnetfelds zugeführt wird, das von einer ersten Motorkomponente (1) ausgeht und auf eine zweite Motorkomponente (2) derart einwirkt, dass die zweite Motorkomponente (2) relativ zur ersten Motorkomponente (1) in eine Schwingungsbewegung versetzt wird, **dadurch gekennzeichnet, dass** für einen Zeitpunkt, zu dem eine Stromzufuhr zur Spule (5) erfolgt, wenigstens eine elektrisch Kenngröße der Spule (5) ermittelt wird, die mit einer Bewegungsgröße der ersten Motorkomponente (1) relativ zu der zweiten Motorkomponente (2) zusammenhängt und die zukünftige Stromzufuhr zur Spule (5) abhängig von der ermittelten Kenngröße erfolgt.

2. Verfahren nach Anspruch 1, **dadurch gekennzeichnet, dass** die zweite Motorkomponente (2) ein Magnetfeld erzeugt oder beeinflusst und dadurch eine Spannung ($U_i$) in der Spule (5) induziert.

3. Verfahren nach einem der vorhergehenden Ansprüche, **dadurch gekennzeichnet, dass** als elektrische Kenngröße die an der Spule (5) insgesamt anliegende Spannung ($U_M$) ermittelt wird.

4. Verfahren nach einem der vorhergehenden Ansprüche, **dadurch gekennzeichnet, dass** als elektrische Kenngröße der durch die Spule (5) fließende Strom (I) ermittelt wird.

5. Verfahren nach Anspruch 4, **dadurch gekennzeichnet, dass** wenigstens ein Messwert für den Strom ($I_a$) durch die Spule (5) vor dem Zeitpunkt, für den der Strom (I) ermittelt werden soll, und wenigstens ein Messwert ($I_b$) nach diesem Zeitpunkt erfasst werden und ein Mittelwert der erfassten Messwerte ($I_a$, $I_b$) gebildet wird.

6. Verfahren nach einem der vorhergehenden Ansprüche, **dadurch gekennzeichnet, dass** als elektrische Kenngröße die zeitliche Änderung des durch die Spule (5) fließenden Stroms (dl / dt) ermittelt wird.

7. Verfahren nach Anspruch 6, **dadurch gekennzeichnet, dass** zur Ermittlung der zeitlichen Änderung des Stroms (dl / dt) zu einen vorgebbaren Zeitpunkt Messwerte für den Strom ($I_a$, $I_b$) vor und nach diesem Zeitpunkt erfasst werden und die Differenz der Messwerte ($I_a$, $I_b$) durch die Zeitdifferenz zwischen den Erfassungen dividiert wird.

8. Verfahren nach einem der vorhergehenden Ansprüche, **dadurch gekennzeichnet, dass** wenigstens eine elektrische Kenngröße zu einem Zeitpunkt ($t_3$) ermittelt wird, zu dem die Relativgeschwindigkeit (v) zwischen den beiden Motorkomponenten (1,2) betragsmäßig ihren Maximalwert ($v_3$) annimmt.

9. Verfahren nach Anspruch 8, **dadurch gekennzeichnet, dass** der Zeitpunkt ($t_3$) für den Maximalwert der Relativgeschwindigkelt ($v_3$) aus den Zeitpunkten ($t_1$, $t_2$) ermittelt wird, zu denen die Geschwindigkeit (v) Null ist.

10. Verfahren nach einem der vorhergehenden Ansprüche, **dadurch gekennzeichnet, dass** eine Schwingungsfrequenz (f) der Motorkomponenten (1,2) aus den Zeitpunkten ($t_1$, $t_2$), zu denen die Relativgeschwindigkeit (v) zwischen den beiden Motorkomponenten (1,2) Null ist, ermittelt wird.

11. Verfahren nach einem der Ansprüche 9 oder 10, **dadurch gekennzeichnet, dass** als Zeitpunkte ($t_1$, $t_2$), zu denen die Relativeschwindigkeit (v) Null ist, die Nulldurchgänge der an der Spule (5) insgesamt anliegenden Spannung ($U_M$) herangezogen werden.

12. Verfahren nach Anspruch 11, **dadurch gekennzeichnet, dass** zur Ermittlung des Zeitpunkts ($t_3$) für den Maximalwert der Relativgeschwindigkeit ($v_3$) die Zeitdifferenz zwischen dem letzten und dem vorletzten Nulldurchgang gebildet wird und die Hälfte der Zeitdifferenz zur Zeit ($t_2$) für letzten Nulldurchgang addiert wird.

13. Verfahren nach einem der Ansprüche 11 oder 12, **dadurch gekennzeichnet, dass** zur Ermittlung eines Nulldurchgangs das Vorzeichen der an der Spule (5) insgesamt anliegenden Spannung ($U_M$) jeweils wiederholt erfasst wird und bei einem Vorzeichenwechsel zwischen aufeinanderfolgenden Erfassungen ein Nulldurchgang detektiert wird.

14. Verfahren nach Anspruch 13, **dadurch gekennzeichnet, dass** der Zeitpunkt des Nulldurchgangs durch Interpolation zwischen der letzten Erfassung vor dem Vorzeichenwechsel und der ersten Erfassung nach dem Vorzeichenwechsel ermittelt wird.

8

**15.** Verfahren nach einem der Ansprüche 9 oder 10, **dadurch gekennzeichnet, daß** als Zeitpunkte ($t_1$, $t_2$) zu denen die Relativgeschwindigkeit (v) Null ist, die Nulldurchgänge der an der Spule (5) insgesamt anliegenden Spannung ($U_M$) abzüglich des Produktes aus Motorwiderstand und Motorstrom (R x I) sowie des Produktes aus Motorinduktivität und der zeitlichen Änderung des Motorstroms (Ldl / dt) herangezogen werden.

**16.** Verfahren nach einem der vorhergehenden Ansprüche, **dadurch gekennzeichnet, dass** die elektrischen Kenngrößen für den selben Zeitpunkt ermittelt werden.

**17.** Verfahren nach einem der vorhergehenden Ansprüche, **dadurch gekennzeichnet, dass** aus der wenigstens einen elektrischen Kenngröße ein Parameter zur Charakterisierung der Schwingungsbewegung des Elektromotors ermittelt wird.

**18.** Verfahren nach Anspruch 17 **dadurch gekennzeichnet, dass** aus der wenigstens einen Kenngröße die Geschwindigkeit (v) der zweiten Motorkomponente (2) ermittelt wird.

**19.** Verfahren nach einem der Ansprüche 17 oder 18, **dadurch gekennzeichnet, dass** aus der wenigstens einen elektrischen Kenngröße eine Schwingungsamplitude (A) der zweiten Motorkomponente (2) ermittelt wird.

**20.** Verfahren nach einem der Ansprüche 17 bis 19, **dadurch gekennzeichnet, dass** der der Spule (5) zugeführte Strom abhängig von einer Abweichung des ermittelten Parameters zur Charakterisierung der Schwingungsbewegung von einem gewünschten Wert variiert wird.

**21.** Verfahren nach einem der vorhergehenden Ansprüche, **dadurch gekennzeichnet, dass** der Spule (5) ein abhängig von der wenigstens einen elektrischen Kenngröße pulsweitenmodulierter Strom zugeführt wird.

**22.** Verfahren nach einem der vorhergehenden Ansprüche, **dadurch gekennzeichnet, dass** der Spule (5) ein Strom mit einer von der wenigstens einen elektrischen Kenngröße abhängigen Stromstärke zugeführt wird.

**23.** Elektrisches Kleingerät mit einem oszillierenden Elektromotor, der eine Spule (5) zur Ausbildung eines Magnetfelds aufweist, das von einer ersten Motorkomponente (1) ausgeht und eine zweite Motorkomponente (2) in eine oszillierende Bewegung versetzt, und mit einem Steuergerät (8) zur Steuerung eines der Spule (5) zugeführten elektrischen Stroms, **dadurch gekennzeichnet, dass** das Steuergerät (8) so ausgebildet ist, dass es für einen Zeitpunkt, zu dem eine Stromzufuhr zur Spule (5) erfolgt, wenigstens eine elektrische Kenngröße der Spule (5) erfasst, die mit einer Bewegungsgröße der ersten oder der zweiten Motorkomponente (1, 2) zusammenhängt, und die zukünftige Stromzufuhr zur Spule (5) abhängig von der ermittelten elektrischen Kenngröße steuert.

**Claims**

**1.** A method for controlling an oscillating electric motor of a small electric appliance, in which an electric current is occasionally supplied to a coil (5) to produce a magnetic field, which emanates from a first motor component (1) and which acts upon a second motor component (2) in a manner such that the second motor component (2) is set into an oscillatory motion, relative to the first motor component (1), **characterized in that**, for an instant of time, at which current is supplied to the coil, at least one electric characteristic of the coil (5) is determined, which is related to a motion quantity of the first motor component (1), relative to the second motor component (2), and the future current feed to the coil (5) is supplied as a function of the characteristic determined.

**2.** The method according to Claim 1, **characterized in that** the second motor component (2) generates or effects a magnetic field thereby inducing a voltage ($U_i$) in the coil (5).

**3.** The method according to any of the preceding claims, **characterized in that** all of the voltage ($U_M$) at the coil (5) is determined as an electric characteristic.

**4.** The method according to any of the preceding claims, **characterized in that** the current (I) flowing through the coil (5) is determined as an electric characteristic.

**5.** The method according to Claim 4, **characterized in that** at least one measured value is recorded for the current ($I_a$) through the coil (5) before the instant of time, for which the current (I) is to be determined, and at least one measured value ($I_b$) is recorded after said instant of time, and a mean value of the recorded measured values ($I_a$, $I_b$) is formed.

6. The method according to any of the preceding claims, **characterized in that** the variation over time of current flowing through the coil (5) (dI/dt) is determined as an electric characteristic.

7. The method according to Claim 6, **characterized in that**, to determine the variation of the current over time (dI/dt) at a specifiable instant of time, measured values for the current ($I_a$, $I_b$) are recorded before and after said instance of time, and the difference between the measured values ($I_a$, $I_b$) is divided by the time difference between the recordings.

8. The method according to any of the preceding claims, **characterized in that** at least one electric characteristic is determined at an instant of time ($t_3$) at which the relative velocity (v) between the two motor components (1, 2) is its maximum value ($v_3$), in its magnitude.

9. The method according to Claim 8, **characterized in that** the instance of time ($t_3$) for the maximum value of the relative velocity ($v_3$) is determined from the instances of time ($t_1$, $t_2$) at which the velocity (v) is zero.

10. The method according to any of the preceding claims, **characterized in that** an oscillation frequency (f) of the motor components (1, 2) is determined from the instances of time ($t_1$, $t_2$) at which the relative velocity (v) between the two motor components (1, 2) is zero.

11. The method according to either Claim 9 or 10, **characterized in that** the zero-crossings of the total voltage ($U_M$) applied to the coil (5) are used as the instances of time ($t_1$, $t_2$) at which the relative velocity (v) is zero.

12. The method according to Claim 11, **characterized in that**, to determine the instance of time ($t_3$) for the maximum value of the relative velocity ($v_3$), the time difference between the last and the next-to-last zero-crossing is formed, and half of the time difference is added to the time ($t_2$) for the last zero-crossing.

13. The method according to either Claim 11 or 12, **characterized in that**, to determine a zero-crossing, the sign of the total voltage ($U_M$) at the coil (5) is repeatedly recorded, and a zero-crossing is detected when there is a sign change between successive recordings.

14. The method according to Claim 13, **characterized in that** the instance of time of the zero-crossing is determined by an interpolation between the last recording before the sign change and the first recording after the sign change.

15. The method according to either Claim 9 or 10, **characterized in that** the zero-crossings of the total voltage ($U_M$) at the coil (5) minus the product of the motor resistance and motor current (R x I) as well as the product of motor inductivity and the variation of motor current (LdI/dt) over time are used as the instances of time ($t_1$, $t_2$) at which the relative velocity (v) is zero.

16. The method according to any of the preceding claims, **characterized in that** the electric characteristics are determined for the same instance of time.

17. The method according to any of the preceding claims, **characterized in that** a parameter for characterizing the oscillatory motion of the electric motor is determined from the at least one electric characteristic.

18. The method according to Claim 17, **characterized in that** the velocity (v) of the second motor component (2) is determined from the at least one characteristic.

19. The method according to either Claim 17 or Claim 18, **characterized in that** an oscillatory amplitude (A) of the second motor component (2) is determined from the at least one characteristic.

20. The method according to any of Claims 17 through 19, **characterized in that** the current supplied to the coil (5) is varied from the desired value, as a function of a deviation of the determined parameter for characterizing the oscillatory motion.

21. The method according to any of the preceding claims, **characterized in that** a pulse-width-modulated current is supplied to the coil (5), as a function of the at least one electric characteristic.

22. The method according to any of the preceding claims, **characterized in that** a current, with a current strength as a function of the at least one electric characteristic, is supplied to the coil (5).

23. A small electric appliance with an oscillating electric motor having a coil (5) for generating a magnetic field, which emanates from a first motor component (1) and sets a second motor component (2) into an oscillatory motion, and with a control unit (8) to control an electric current supplied to a coil (5), **characterized in that** the control unit (8) is designed such that, for an instant of time at which current is supplied to the coil (5), it records at least one electric characteristic of the coil (5), which is related to a motion quantity of the first or of the second motor component (1, 2), and it controls the future current feed to the coil (5) as a function of the electric characteristic determined.

## Revendications

1. Procédé pour commander un moteur électrique oscillant d'un petit appareil électrique, dans lequel une bobine (5) est alimentée, au moins par intermittence, par un courant électrique pour la réalisation d'un champ magnétique, qui part d'un premier composant (1) du moteur et agit sur un deuxième composant (2) du moteur de manière telle que le deuxième composant (2) du moteur est mis en un mouvement oscillant par rapport au premier composant (1) du moteur, **caractérisé en ce qu'**à un moment où la bobine (5) est alimentée en courant, au moins une caractéristique électrique de la bobine (5) est déterminée, qui est associée à une dimension de mouvement du premier composant (1) du moteur par rapport au deuxième composant (2) du moteur et l'alimentation future en courant de la bobine (5) est réalisée en fonction de la caractéristique déterminée.

2. Procédé selon la revendication 1, **caractérisé en ce que** le deuxième composant (2) du moteur produit ou influence un champ magnétique et induit ainsi une tension ($U_i$) dans la bobine (5).

3. Procédé selon l'une quelconque des revendications précédentes, **caractérisé en ce qu'**on détermine comme caractéristique électrique la tension totale ($U_M$) appliquée à la bobine (5).

4. Procédé selon l'une quelconque des revendications précédentes, **caractérisé en ce qu'**on détermine comme caractéristique électrique le courant (1) passant dans la bobine (5).

5. Procédé selon la revendication 4, **caractérisé en ce qu'**au moins une valeur de mesure pour le courant ($I_a$) dans la bobine (5) est enregistrée avant le moment où le courant (I) est déterminé et au moins une valeur de mesure ($I_b$) est enregistrée après ce moment et une valeur moyenne des valeurs de mesure enregistrées ($I_a$, $I_b$) est formée.

6. Procédé selon l'une quelconque des revendications précédentes, **caractérisé en ce qu'**on détermine comme caractéristique électrique la modification temporaire du courant (dI / dt) passant dans la bobine (5).

7. Procédé selon la revendication 6, **caractérisé en ce que** pour la détermination de la modification temporaire du courant (dI / dt), on enregistre à un moment prédéfinissable des valeurs de mesure pour le courant ($I_a$, $I_b$) avant et après ce moment et la différence des valeurs de mesure ($I_a$, $I_b$) est divisée par la différence de temps entre les enregistrements.

8. Procédé selon l'une quelconque des revendications précédentes, **caractérisé en ce qu'**au moins une caractéristique électrique est déterminée à un moment ($t_3$) où la vitesse relative (v) entre les deux composants (1,2) du moteur présente sa valeur absolue maximale ($v_3$).

9. Procédé selon la revendication 8, **caractérisé en ce que** le moment ($t_3$) pour la valeur maximale de la vitesse relative ($v_3$) est déterminé à partir des moments ($t_1$, $t_2$) où la vitesse (v) est nulle.

10. Procédé selon l'une quelconque des revendications précédentes, **caractérisé en ce qu'**on détermine une fréquence d'oscillation (f) des composants (1,2) du moteur à partir des moments ($t_1$, $t_2$) où la vitesse relative (v) entre les deux composants (1,2) du moteur est nulle.

11. Procédé selon l'une quelconque des revendications 9 ou 10, **caractérisé en ce qu'**on utilise comme moments ($t_1$, $t_2$) où la vitesse relative (v) est nulle les passages par zéro de la tension totale ($U_M$) appliquée à la bobine (5).

**12.** Procédé selon la revendication 11, **caractérisé en ce que** pour la détermination du moment ($t_3$) de la valeur maximale de la vitesse relative ($v_3$), on forme la différence de temps entre le dernier et l'avant-dernier passage par zéro et on additionne la moitié de la différence de temps au temps ($t_2$) du dernier passage par zéro.

**13.** Procédé selon l'une quelconque des revendications 11 ou 12, **caractérisé en ce que** pour la détermination d'un passage par zéro, on enregistre à chaque fois, de manière répétée, le signe de la tension totale ($U_M$) appliquée à la bobine (5) et on détecte un passage par zéro lors d'un changement de signe entre deux enregistrements consécutifs.

**14.** Procédé selon la revendication 13, **caractérisé en ce que** le moment du passage par zéro est déterminé par interpolation entre le dernier enregistrement avant le changement de signe et le premier enregistrement après le changement de signe.

**15.** Procédé selon l'une quelconque des revendications 9 ou 10, **caractérisé en ce qu'**on utilise comme moments ($t_1$, $t_2$) où la vitesse relative ($v$) est nulle, les passages par zéro de la tension totale ($U_M$) appliquée à la bobine (5) déduction faite du produit de la résistance du moteur et du courant du moteur (R x I) ainsi que du produit de l'inductivité du moteur et de la modification temporaire du courant du moteur (LdI / dt).

**16.** Procédé selon l'une quelconque des revendications précédentes, **caractérisé en ce qu'**on détermine les caractéristiques électriques pour le même moment.

**17.** Procédé selon l'une quelconque des revendications précédentes, **caractérisé en ce qu'**on détermine à partir de ladite au moins une caractéristique électrique un paramètre pour caractériser le mouvement d'oscillation du moteur électrique.

**18.** Procédé selon la revendication 17, **caractérisé en ce qu'**on détermine à partir de ladite au moins une caractéristique la vitesse ($v$) du deuxième composant (2) du moteur.

**19.** Procédé selon l'une quelconque des revendications 17 ou 18, **caractérisé en ce qu'**on détermine à partir de ladite au moins une caractéristique électrique une amplitude d'oscillation (A) du deuxième composant (2) du moteur.

**20.** Procédé selon l'une quelconque des revendications 17 à 19, **caractérisé en ce que** le courant alimenté dans la bobine (5) est varié en fonction d'une déviation du paramètre déterminé pour caractériser le mouvement d'oscillation d'une valeur souhaitée.

**21.** Procédé selon l'une quelconque des revendications précédentes, **caractérisé en ce que** la bobine (5) est alimentée en un courant à largeur d'impulsion modulée en fonction de ladite au moins une caractéristique électrique.

**22.** Procédé selon l'une quelconque des revendications précédentes, **caractérisé en ce que** la bobine (5) est alimentée en un courant présentant une intensité en fonction de ladite au moins une caractéristique électrique.

**23.** Petit appareil électrique présentant un moteur électrique oscillant qui présente une bobine (5) pour la réalisation d'un champ magnétique, qui part d'un premier composant (1) du moteur et met un deuxième composant (2) du moteur en un mouvement d'oscillation et présentant un dispositif de commande (8) pour la commande d'un courant électrique alimenté dans la bobine (5), **caractérisé en ce que** le dispositif de commande (8) est réalisé de manière telle qu'il enregistre à un moment où la bobine (5) est alimentée en courant, au moins une caractéristique électrique de la bobine (5), qui est associée à une dimension de mouvement du premier ou du deuxième composant (1, 2) du moteur et qu'il commande l'alimentation future en courant de la bobine (5) en fonction de la caractéristique déterminée.

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5632087 A
- EP 1063760 A2